# EUROPEAN PATENT APPLICATION

(11) **EP 4 342 791 A1**
(43) Date of publication of application: **27.03.2024**
(21) Application number: 23192061.2
(22) Date of filing: 18.08.2023
(51) Int. Cl.: B64C 13/16, B64C 13/18, B64D 45/00

(54) **TEMPORARY BACKUP CONTROL METHODOLOGY FOR ACTUATION OF A CONTROL SURFACE OF A VEHICLE**

(30) Priority: 21.09.2022 US 202217934097
(71) Applicant: Gulfstream Aerospace Corporation, Savannah, GA 31402 (US)
(72) Inventor: FONSECA, Marco Paulo, Savannah, 31402 (US)
(74) Representative: LKGlobal UK Ltd.

(57) **Abstract**

A system onboard a vehicle, an aircraft, and a method of controlling actuation of a moveable control surface of a vehicle are disclosed here. An operating method involves: obtaining a force measurement and a deflection measurement responsive to manipulation of an inceptor for the moveable control surface; determining an issue associated with the inceptor, based on the obtained force and deflection measurements and vehicle data that characterizes expected operating behavior of the vehicle under current operating conditions; and, in response to the determining, activating a temporary backup control mode for the moveable control surface. While the temporary mode is active, control surface actuation signals are generated with an onboard system that disregards deflection measurements and processes force measurements of the inceptor. While the temporary mode is active, generated control surface actuation signals are communicated to an actuation system that is coupled to the moveable control surface of the vehicle.

## Description

### TECHNICAL FIELD

Embodiments of the subject matter described herein relate generally to vehicle control systems and their related sensors and instrumentation. More particularly, embodiments of the subject matter relate to an inceptor system suitable for use with aircraft, and to a methodology for controlling aircraft using such an inceptor system.

### BACKGROUND

Vehicles such as aircraft utilize onboard sensors, instruments, systems, and/or devices to measure various quantities, parameters, vehicle status data, environmental conditions, and the like, and to enable an operator (a pilot, copilot, driver, etc.) to control the vehicle. In this regard, an aircraft may include one or more inceptor systems that allow a pilot to control the pitch and roll of the aircraft. Modern active control inceptor systems employ sensors to detect physical manipulation of the inceptor, which may be implemented as a joystick controller, a sidestick controller, a yoke, or the like. To this end, sensors can measure the amount of force applied to the inceptor, along with the amount of deflection or travel of the inceptor. The measured force and deflection can be processed by a flight control computer to generate corresponding commands or control signals that actuate one or more aircraft control surfaces (e.g., elevators, stabilizers, ailerons, spoilers) as needed.

Operation of inceptor systems should be as accurate and reliable as possible. Accordingly, it is desirable to have a system and related methodology to monitor and check performance of an inceptor system onboard a vehicle such as an aircraft. Furthermore, other desirable features and characteristics will become apparent from the subsequent detailed description and the appended claims, taken in conjunction with the accompanying drawings and the foregoing technical field and background.

### BRIEF SUMMARY

A method of controlling actuation of a moveable control surface of a vehicle is disclosed here. Exemplary embodiments of the method involve: obtaining at least one force measurement and at least one deflection measurement in response to manipulation of an inceptor for the moveable control surface; determining a potential malfunction, failure state, or error condition associated with the inceptor, based on the obtained at least one force measurement, the obtained at least one deflection measurement, and vehicle data that characterizes expected operating behavior of the vehicle under current operating conditions; and, in response to the determining step, activating a temporary backup control mode for the moveable control surface. While the temporary backup control mode is active, the method generates control surface actuation signals with an onboard computer system that disregards deflection measurements of the inceptor and processes force measurements of the inceptor. While the temporary backup control mode is active, the method communicates the generated control surface actuation signals to an actuation system that is coupled to the moveable control surface of the vehicle.

Also disclosed here is a system onboard a vehicle having a movable control surface. Exemplary embodiments of the system include: an inceptor configured to control movement of the movable control surface; at least one force sensor coupled to the inceptor; at least one deflection sensor coupled to the inceptor; an onboard computer system comprising at least one processor; and at least one processor-readable medium associated with the at least one processor. The at least one processor-readable medium stores processor-executable instructions configurable to be executed by the at least one processor to perform a method of controlling actuation of the movable control surface. Certain embodiments of the method involve: obtaining force sensor data provided by the at least one force sensor, and deflection sensor data provided by the at least one deflection sensor, in response to manipulation of the inceptor; determining a potential malfunction, failure state, or error condition associated with the inceptor, based on the obtained force sensor data, the obtained deflection sensor data, and vehicle data that characterizes expected operating behavior of the vehicle under current operating conditions; and, in response to the determining step, activating a temporary backup control mode for the movable control surface. While the temporary backup control mode is active, the method generates control surface actuation signals with the onboard computer system, wherein usage of the deflection sensor data is limited during generation of the control surface actuation signals. While the temporary backup control mode is active, the method communicates the generated control surface actuation signals to an actuation system that is coupled to the movable control surface.

Also disclosed here is an exemplary embodiment of an aircraft having: a moveable control surface; an actuation system coupled to the moveable control surface; an inceptor configured to control movement of the movable control surface; at least one force sensor coupled to the inceptor; at least one deflection sensor coupled to the inceptor; a flight control computer system comprising at least one processor; and at least one processor-readable medium associated with the at least one processor. The at least one processor-readable medium stores processor-executable instructions configurable to be executed by the at least one processor to perform a method of controlling actuation of the movable control surface. Exemplary embodiments of the method involve: determining a potential malfunction, failure state, or error condition associated with the inceptor, based on force sensor data provided by the at least one force sensor, deflection sensor data provided by the at least one deflection sensor, and vehicle data that characterizes expected operating behavior of the vehicle under current operating conditions; and, in response to the determining step, activating a temporary backup control mode for the movable control surface. While the temporary backup control mode is active, the method generates control surface actuation signals with the flight control computer system, wherein the generating disregards the deflection sensor data and generates the control surface actuation signals based on the force sensor data. While the temporary backup control mode is active, the method communicates the generated control surface actuation signals to the actuation system.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic top view representation of an aircraft that is configured in accordance with exemplary embodiments of the invention;
FIG. 2 is a block diagram that depicts various systems and components onboard an aircraft that is configured in accordance with exemplary embodiments of the invention;
FIG. 3 is a block diagram of an exemplary embodiment of a computer-based device; and
FIG. 4 is a flow chart that illustrates an exemplary embodiment of a process for actuating a control surface of a vehicle such as an aircraft.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software, or the like, various elements of the systems and devices described herein are essentially the code segments or instructions that cause one or more processor devices to perform the various tasks. In certain embodiments, the program or code segments are stored in at least one tangible processor-readable medium, which may include any medium that can store or transfer information. Examples of a non-transitory and processor-readable medium include an electronic circuit, a semiconductor memory device, a ROM, a flash memory, an erasable ROM (EROM), a floppy diskette, a CD-ROM, an optical disk, a hard disk, or the like.

For the sake of brevity, conventional techniques related to aircraft control and navigation systems, inceptor system hardware and control logic, active joysticks or sidesticks, the processing of force sensor, deflection sensor, and other sensor data onboard an aircraft, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

A vehicle-based system and related operating methodologies are disclosed herein. In accordance with certain non-limiting embodiments, the system is deployed onboard an aircraft such as an airplane. However, it should be appreciated that embodiments of the disclosed system can be utilized for other vehicle applications including, without limitation: trains; helicopters; automobiles; watercraft; submarines; monorails; amusement park rides; transportation systems; spacecraft; or the like.

Modern aircraft can be provided with one or more active control inceptors, such as an active control sidestick controller that is configured and operated to control pitch and roll of the aircraft. Certain embodiments of an active control sidestick system use force sensors and deflection sensors to detect/measure movement of the sidestick when manipulated by the pilot. An active control sidestick system may employ certain safeguards and measures to address potential malfunctions or hardware issues associated with the sidestick. For example, the system may utilize internal logic that detects when the sidestick is physically jammed such that its movement is restricted or limited. In such a jam scenario, the system can transfer flight control from the potentially jammed sidestick controller to another sidestick controller (e.g., one used by the copilot). Although transfer of control in this manner is effective and safe in many situations, additional safeguards or backup control methodologies can be implemented to improve performance, reliability, and safety. Enhanced safety and mitigation are desirable at some critical or extreme conditions, such as final landing flare, takeoff, or evasive maneuvering.

To this end, the subject matter presented here relates to a system and corresponding operating methodology associated with the detection and mitigation of inceptor jam conditions onboard a vehicle such as an aircraft. In response to detection of an inceptor jam state, a temporary aircraft control scheme is utilized to provide some level of control of the aircraft based on inceptor force sensor data instead of inceptor deflection sensor data. In certain embodiments, the temporary force-based control methodology uses limited authority pitch or roll commands, which are processed by the inceptor system and/or by the aircraft's flight control computer system. The temporary control methodology can remain active until the jam condition is resolved or until aircraft control is assumed by another inceptor device or system onboard the aircraft. The actual limits of the temporary control methodology are a function of the airframe and its control law design to provide enough control in the short time that is needed for a backup or redundant control system to assume responsibility.

The disclosed methodology can also be deployed on legacy vehicles or subsystems that do not utilize active control inceptor systems. In such deployments, the desired functionality can be provided by adding force sensors to the inceptor system and means to compute and execute the detection logic/transfer of control mode.

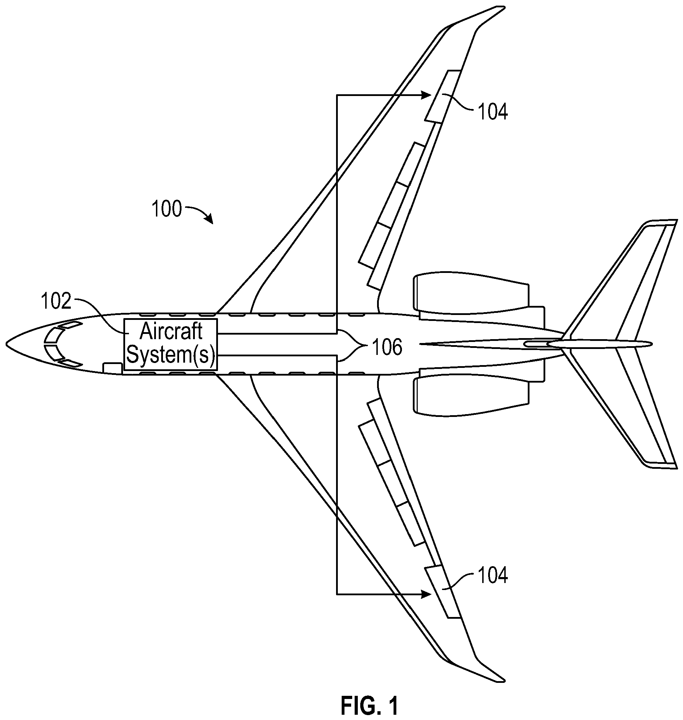

Referring to the drawings, FIG. 1 is a schematic top view representation of an exemplary embodiment of an aircraft 100 having one or more onboard aircraft systems 102, which may include, without limitation, any of the following in combination and in any number of iterations or multiples: a flight control computer system; an inceptor system, which may include or cooperate with an inceptor (control device), at least one force sensor, and at least one deflection sensor; a display system; a warning indication system; a messaging or notification system for the flight crew; and various inertial sensors. FIG. 1 represents the various onboard aircraft systems 102 as a single block, but it should be understood that an embodiment of the aircraft 100 will implement the onboard aircraft systems 102 with a variety of different physical, logical, and computer-implemented components.

As mentioned above, the onboard aircraft systems 102 include at least one inceptor system (not separately depicted in FIG. 1) that is utilized to control the actuation of at least one moveable control surface 104 of the aircraft 100. The aircraft 100 may include several different moveable control surfaces 104 including, without limitation: ailerons; a rudder; elevators; stabilizers; and spoilers. The inceptor system includes an inceptor (e.g., a stick controller (such as joystick controller or a sidestick controller) or a yoke) that can be physically manipulated by a pilot as needed to generate control surface actuation signals, which are communicated to an actuation system coupled to one or more of the moveable control surfaces 104. In other words, the inceptor is configured to control movement of a moveable control surface 104 of the aircraft 100. FIG. 1 schematically illustrates two communication paths 106 leading from the aircraft systems 102 to the moveable control surfaces 104 (the ailerons). These communication paths 106 represent physical and/or wireless data communication channels that are suitably configured, maintained, and operated to provide the actuation signals to the actuation systems of the aircraft 100. For simplicity and ease of illustration, FIG. 1 depicts the communication paths 106 for the ailerons. Although only two communication paths 106 are shown in FIG. 1, the aircraft 100 may support any number of communication paths 106 as needed to control the various aircraft control surfaces.

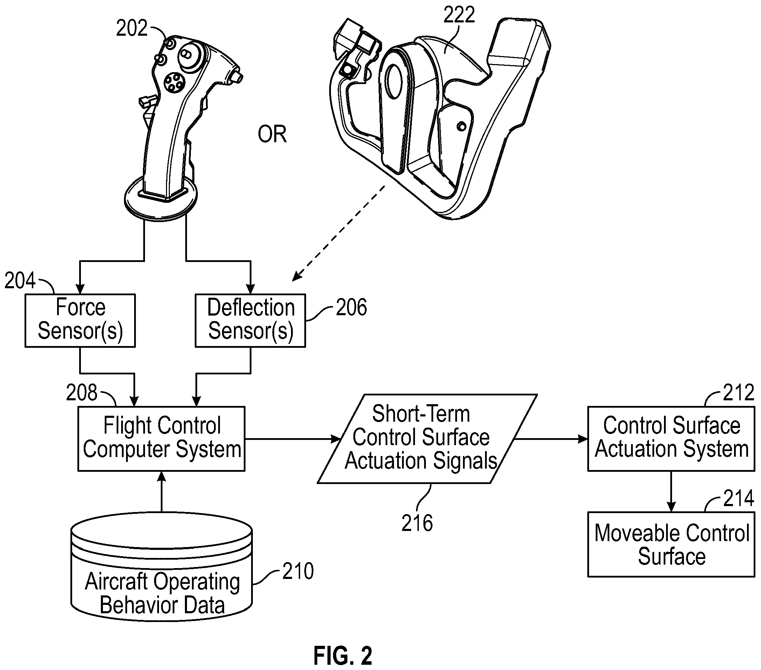

FIG. 2 is a block diagram that depicts various systems and components that may be onboard the aircraft 100. Indeed, the onboard aircraft systems 102 shown in FIG. 1 may include some of the systems and components depicted in FIG. 2. The illustrated embodiment includes the following systems and components: an inceptor 202; at least one force sensor 204 coupled to the inceptor 202; at least one deflection sensor 206 coupled to the inceptor 202; an onboard flight control computer system 208 (or any type of computer system) having at least one processor; a database 210 coupled to or otherwise associated with the flight control computer system 208; a control surface actuation system 212 in communication with the flight control computer system 208; and a moveable control surface 214 coupled to the actuation system 212. A deployed implementation of the aircraft 100 may include some or all of these systems and components, additional systems and components (as needed or desired), and/or alternative systems and components (as needed or desired). FIG. 2 is merely an illustrative example that depicts certain systems and components that support the inventive subject matter described herein.

Although not depicted separately in FIG. 2, the aircraft 100 includes or cooperates with at least one data communication network that facilitates communication between the various components, systems, and logic onboard the aircraft 100. For example, the data communication network can be utilized to communicate sensor data, measurements, alerts, messages, flight control commands, and the like. In this regard, the data communication network can be utilized to transfer force sensor data and deflection sensor data from the force sensor(s) 204 and the deflection sensor(s) 206 to the flight control computer system 208. Moreover, the data communication network can be utilized to communicate control surface actuation signals 216 from the flight control computer system 208 to the actuation system 212 as needed.

The inceptor 202 in FIG. 2 is realized as a stick controller (e.g., one of two sidestick controllers onboard an aircraft having one sidestick controller for the pilot and a redundant sidestick controller for the copilot). A sidestick controller of this type can be physically manipulated forward and backward to control pitch of the aircraft, and sideways to control roll of the aircraft. FIG. 2 also depicts another inceptor that can be used in the manner described in more detail below, e.g., a yoke 222.

The force sensor(s) 204 generate force data in response to movement of the inceptor 202 caused by physical manipulation by a user. The force data can be provided to the flight control computer system 208 to obtain force measurements corresponding to user interaction with the inceptor 202. Accordingly, the inceptor system includes at least one force sensor 204 that can detect and measure force applied in each possible direction of travel, e.g., forward, backward, left, and right (for a sidestick controller). Similarly, the deflection sensor(s) 206 generate deflection data in response to movement of the inceptor 202 caused by physical manipulation by a user. The deflection data can be provided to the flight control computer system 208 to obtain deflection measurements corresponding to user interaction with the inceptor 202. Accordingly, the inceptor system includes at least one deflection sensor 206 that can detect and measure deflection or displacement in each possible direction of travel, e.g., forward, backward, left, and right (for a sidestick controller). Under normal and expected operating conditions, manipulation of the inceptor 202 by a pilot of the aircraft generates force data with associated deflection data, wherein a given amount of force applied to the inceptor 202 results in a corresponding amount of deflection of the inceptor 202.

The flight control computer system 208 regulates the manner in which the aircraft 100 responds to manual, automated, or fly-by-wire commands. Flight control computer systems are well known to those familiar with modern avionics and aircraft control systems, and need not be described in detail here. At least one flight control computer system 208 onboard the aircraft 100 supports fly-by-wire operation, which generates electronic control signals in response to pilot interaction with physical flight control devices (inceptors) or features. Fly-by-wire operation can also leverage sensor data and measurement data provided by various onboard systems that enable the flight control computer system 208 to have accurate and real time awareness of the current operating conditions of the aircraft 100. As explained in more detail below, the flight control computer system 208 of the aircraft 100 supports at least two different control modes for moveable control surfaces: a normal or default control mode; and a temporary backup control mode. The temporary backup control mode may be characterized as a degraded mode of operation that provides safe but less desirable control of the aircraft 100 for a very brief period of time. During the temporary backup control mode, the flight control computer system 208 issues short-term control surface actuation signals 216 to the control surface actuation systems 212.

The database 210 may be integrated with the flight control computer system 208 or it may be part of a remote database system that communicates with the flight control computer system 208. In certain embodiments, the database 210 is utilized to store, maintain, and provide access to aircraft data that characterizes expected operating behavior of the aircraft 100 under current operating conditions. The database 210 can be populated with persistent operating behavior data, or it can be updated according to a schedule or in a dynamic and ongoing manner to continuously characterize the operating behavior of the aircraft 100. In this regard, a particular operating state or condition of the aircraft 100 can be characterized using any or all of the following data or measurements, without limitation: airspeed; altitude; inertial rates and accelerations; heading; attitude; trajectory; a predicted flight path; status or position of moveable control surfaces; estimated weight; fuel level; and outside temperature. The database 210 may also include inceptor-related data that corresponds to different data objects that characterize the operating behavior of the aircraft. In other words, for a specific aircraft operating state (or a "range" of operating states that are substantially similar or essentially identical for purposes of the methodology described here), the database 210 can maintain force measurements (force data) and/or deflection measurements (deflection data) corresponding to normal or expected behavior of the onboard inceptors. As explained in more detail below, the aircraft's operating behavior data and associated force and deflection data maintained in the database 210 can be utilized to predict or estimate how best to actuate the aircraft's control surfaces while the temporary backup control mode is active.

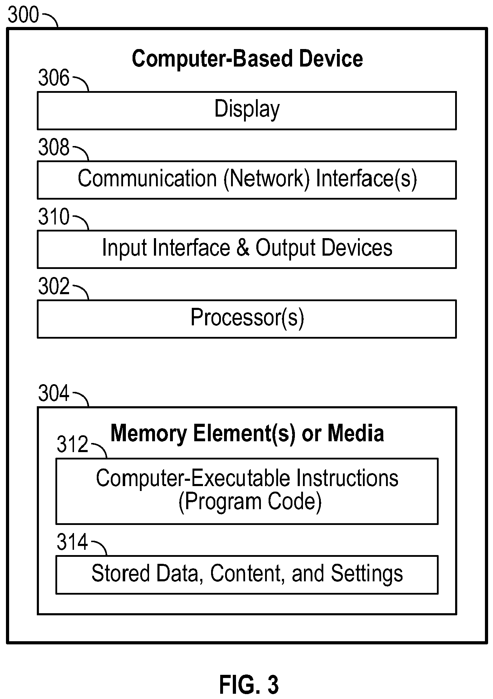

In accordance with certain embodiments, the aircraft system(s) 102 depicted in FIG. 1, and one or more of the items depicted in FIG. 2 can be implemented as at least one computer-based or a processor-based device, system, or piece of equipment. In this regard, FIG. 3 is a simplified block diagram representation of an exemplary embodiment of a computer-based device 300, which may be used to implement certain devices or systems onboard the aircraft 100.

The device 300 generally includes, without limitation: at least one processor 302; at least one memory storage device, storage media, or memory element 304; a display 306; at least one communication (network) interface 308; and input and output (I/O) devices 310, such as an input interface, one or more output devices, one or more human/machine interface elements, or the like. In practice, the device 300 can include additional components, elements, and functionality that may be conventional in nature or unrelated to the particular application and methodologies described here.

A processor 302 may be, for example, a central processing unit (CPU), a field programmable gate array (FPGA), a microcontroller, an application specific integrated circuit (ASIC), or any other logic device or combination thereof. One or more memory elements 304 are communicatively coupled to the at least one processor 302, and can be implemented with any combination of volatile and non-volatile memory. The memory element 304 has non-transitory processor-readable and processor-executable instructions (program code) 312 stored thereon, wherein the instructions 312 are configurable to be executed by the at least one processor 302 as needed. When executed by the at least one processor 302, the instructions 312 cause the at least one processor 302 to perform the associated tasks, processes, and operations defined by the instructions 312. Of course, the memory element 304 may also include instructions associated with a file system of the host device 300 and instructions associated with other applications or programs. Moreover, the memory element 304 can serve as a data storage unit for the host device 300. For example, the memory element 304 can provide storage 314 for aircraft data, navigation data, sensor data, measurements, image and/or video content, settings or configuration data for the aircraft, and the like.

The display 306 (if deployed with the particular embodiment of the device 300) may be integrated with the device 300 or communicatively coupled to the device 300 as a peripheral or accessory component. The shape, size, resolution, and technology of the display 306 will be appropriate to the particular implementation of the device 300. The display 306 can be realized as a monitor, touchscreen, or another conventional electronic display that is capable of graphically presenting data and/or information provided by the device 300.

The communication interface 308 represents the hardware, software, and processing logic that enables the device 300 to support data communication with other devices. In practice, the communication interface 308 can be suitably configured to support wireless and/or wired data communication protocols as appropriate to the particular embodiment. For example, the communication interface 308 can be designed to support a cellular communication protocol, a short-range wireless protocol (such as the BLUETOOTH communication protocol), and/or a WLAN protocol. As another example, if the device 300 is a desktop or laptop computer, then the communication interface can be designed to support the BLUETOOTH communication protocol, a WLAN protocol, and a LAN communication protocol (e.g., Ethernet). In accordance with certain aircraft applications, the communication interface 308 is designed and configured to support one or more onboard network protocols used for the communication of information between devices, components, and subsystems of the aircraft 100.

The I/O devices 310 enable a user of the device 300 to interact with the device 300 as needed. In practice, the I/O devices 310 may include, without limitation: an input interface to receive data for handling by the device 300; a speaker, an audio transducer, or other audio feedback component; a haptic feedback device; a microphone; a mouse or other pointing device; a touchscreen or touchpad device; a keyboard; a joystick; a biometric sensor or reader (such as a fingerprint reader, a retina or iris scanner, a palm print or palm vein reader, etc.); a camera; a lidar sensor; or any conventional peripheral device. In this context, a touchscreen display 306 can be categorized as an I/O device 310. Moreover, a touchscreen display 306 may incorporate or be controlled to function as a fingerprint or palm print scanner. A haptic feedback device can be controlled to generate a variable amount of tactile or physical feedback, such as vibrations, a force, knock, or bump sensation, a detectable movement, or the like. Haptic feedback devices and related control schemes are well known and, therefore, will not be described in detail here.

The subject matter presented here relates to a method of controlling actuation of a moveable control surface of an aircraft during a brief period of time following a determination that the inceptor system linked to the moveable control surface is not functioning in a normal and expected manner. Rather than disable the potentially suspect inceptor system or ignoring its output, the control methodology described herein still leverages the output of the inceptor system, but in a limited or restricted manner. The temporary backup control methodology processes the force sensor data from the potentially suspect inceptor system to actuate the associated control surface in accordance with an estimated or predicted outcome that is also based on the current operating condition of the aircraft. The temporary backup control mode provides enhanced safety and predictability during a short period of time that allows the flight control computer system and/or the pilots to recover in a safe and efficient manner.

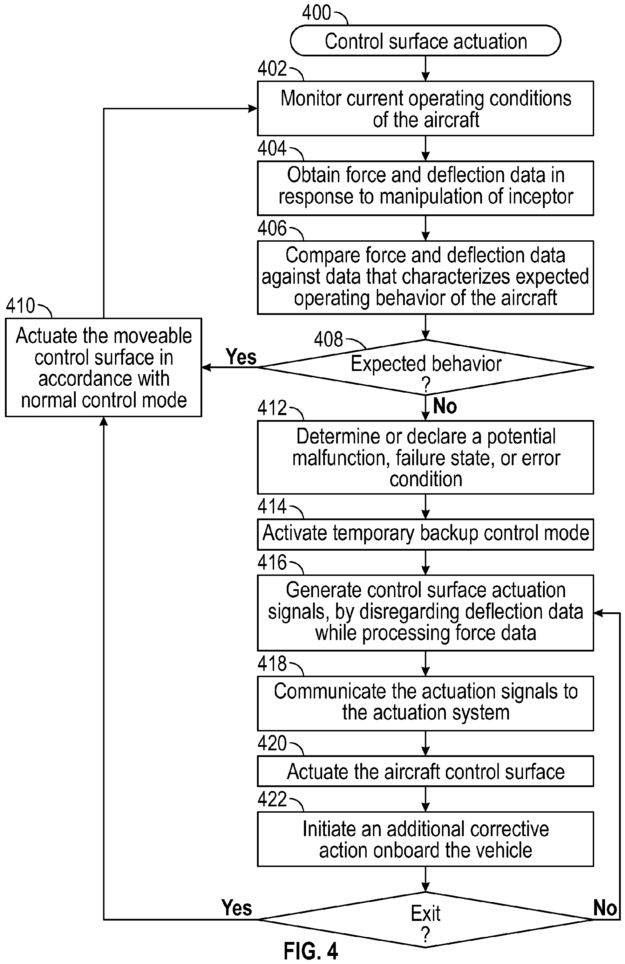

FIG. 4 is a flow chart that illustrates an exemplary embodiment of a process 400 for actuating a control surface of a vehicle such as an aircraft. The various tasks performed in connection with the process 400 may be performed by software, hardware, firmware, or any combination thereof. For illustrative purposes, the following description of the process 400 may refer to elements mentioned above in connection with FIGS. 1-3. It should be appreciated that the process 400 may include any number of additional or alternative tasks, the tasks shown in FIG. 4 need not be performed in the illustrated order, and the process 400 may be incorporated into a more comprehensive procedure or process having additional functionality not described in detail herein. Moreover, one or more of the tasks shown in FIG. 4 could be omitted from an embodiment of the process 400 as long as the intended overall functionality remains intact.

Although not always required, this description assumes that the host aircraft includes an active control sidestick system that includes one active control sidestick for the pilot and another active control sidestick for the copilot. The process 400 can be executed in an ongoing manner during operation of the aircraft, including ground operation, taxiing, and takeoff. The process 400 monitors and records the current operating conditions or status of the aircraft in a continuous manner, or as often as desired (task 402). The monitoring that occurs during task 402 may observe, record, and/or store any of the aircraft data mentioned above with reference to the database 210. This description assumes that the pilot (or copilot) engages a sidestick controller with the intent of adjusting the position of at least one moveable control surface of the aircraft. Accordingly, the process 400 obtains force sensor data provided by at least one force sensor, and deflection sensor data provided by at least one deflection sensor, wherein the obtained sensor data is generated in response to manipulation of the inceptor for a movable control surface (task 404). The force sensor data represents or is associated with at least one force measurement corresponding to the manipulation of the inceptor, and the deflection sensor data represents or is associated with at least one deflection measurement corresponding to the manipulation of the inceptor.

The process 400 continues by checking the accuracy, integrity, and/or reliability of the measurement data generated by the inceptor system. In certain embodiments, the process 400 analyzes force data with its corresponding deflection data to determine whether the detected deflection of the inceptor is consistent with the detected amount of force applied to the inceptor. For example, the database 210 can maintain values that indicate an expected range of travel or deflection for a particular applied force, and/or an expected range of applied force for a particular amount of travel or deflection. Additionally or alternatively, the process 406 may analyze the obtained force data, the obtained deflection data, and aircraft data that characterizes the expected operating behavior of the aircraft under the current operating conditions (task 406). If the reviewed data or measurements indicate normal or expected behavior of the inceptor (the "Yes" branch of query task 408), then the process 400 handles the obtained force and deflection data as usual to actuate the moveable control surface in accordance with a normal or default control scheme, mode, or algorithm (task 410). If the reviewed data or measurements indicate abnormal or unexpected behavior of the inceptor (the "No" branch of query task 408), then the process 400 determines, flags, or declares a potential malfunction, failure state, or error condition associated with the inceptor (task 412). The determination made at task 412 is based on the obtained force measurement (or force data), the obtained deflection measurement (or deflection data), and at least some of the aircraft data that characterizes the expected operating behavior of the aircraft under the current operating conditions. As one non-limiting example, a potential malfunction, failure state, or error condition could relate to the existence of a physical jam, obstruction, and/or mechanical issue that inhibits movement or travel of the inceptor. In such a scenario, the determining at task 412 can determine or detect that a deflection measurement is less than expected for a corresponding force measurement. In this regard, a physically jammed or impeded inceptor will exhibit less deflection (than usual) for a particular amount of applied force. The process 400 analyzes the obtained data to quickly detect when an inceptor might be in a jammed state.

This description assumes that the process 400 detects some type of abnormal inceptor response or behavior. Accordingly, in response to determining at task 412, the process 400 activates, initiates, or transitions to a temporary backup control mode for the moveable control surface (task 414). Rather than disabling the potentially suspect inceptor or ignoring the sensor data provided by the potentially suspect inceptor, the aircraft can utilize and maintain the temporary backup control mode for a desired period of time. In certain embodiments, the temporary backup control mode is maintained as active until some form of corrective action is taken by the onboard flight control computer system. Alternatively or additionally, the temporary backup control mode can be maintained as active until some form of corrective action is taken by an operator of the aircraft, e.g., the copilot. Alternatively or additionally, the temporary backup control mode can be maintained as active only for a predetermined or calculated time period (e.g., a short time period that is defined or determined by the next mitigation action from an operator of the aircraft, such as transfer of command from the pilot to the copilot), or until the flight control computer system has verified that accurate, reliable, and safe operation can continue with little or no involvement of the potentially suspect inceptor.

While the temporary backup control mode is active, the onboard computer system (e.g., the flight control computer system) still controls the actuation of at least one moveable control surface of the aircraft in response to at least some of the measurement data obtained from the problematic inceptor. In certain embodiments, the process 400 generates appropriate control surface actuation signals with the onboard computer system, by way of a control algorithm or methodology that disregards (or limits usage of) the deflection sensor data obtained from the problematic inceptor, while still using and processing the force sensor data obtained from the problematic inceptor (task 416). One or more additional safeguards, restrictions, or limits can also be implemented when the temporary backup control mode is active. For example, the generating at task 416 can be performed in an appropriate manner to generate the control surface actuation signals as limited authority commands for the desired control surface(s). In this context, "limited authority" provides enough command capability to allow for safe operation of the aircraft in the temporary backup control mode, while limiting the exposure to undesired handling characteristics caused by the lack of displacement feedback to the pilot's commands. The particular scheme, limits, and/or restrictions utilized in connection with limited authority commands may vary by flight phase and/or aircraft characteristics.

While the temporary backup control mode is active, the control surface actuation signals can be generated in response to the force data obtained from the problematic inceptor, and further in response to at least some of the aircraft data maintained in the database 210 (see FIG. 2). Data that characterizes the expected operating behavior of the aircraft under the current operating conditions, along with data that characterizes the normal and expected deflection/force response of the inceptor, can be processed to predict, calculate, or estimate the intended inceptor response to the measured force as actually applied to the inceptor. The system still treats the force data provided by the problematic inceptor as valid data for purposes of calculating actuation signals. The predicted, calculated, or estimated deflection response can be utilized to generate safe and reliable commands to actuate the moveable control surface(s) while the aircraft is operating in the temporary backup control mode. The control surface actuation signals generated at task 416 are communicated to the actuation system that is coupled to the moveable control surface that is to be moved (task 418). The actuation system responds to the actuation signals by actuating and moving the control surface by the commanded amount (task 420).

In practice, a control inceptor can be susceptible to issues, including physical jams and other modes. Most aircraft operations utilize two pilots, and the transfer of control to the second pilot is the traditional means of mitigation for potential hazards caused by such issues. If something happens during a flight phase that requires immediate reaction from the pilot, i.e., takeoff and landing transitions, collision avoidance, etc., the time spent transferring the control responsibility to the second in command is enough to increase potentially hazardous outcomes. By utilizing the sensors and computation capability of an active side stick controller, the disclosed methodology leverages its capabilities by generating a limited/temporary control input to the aircraft control system based on the pilot applied forces only, bypassing the need for proper deflection to define the stick input as valid and providing enough input to the control surfaces to allow the pilot in command to fly out of the critical flight phase. The control inputs based on inceptor forces are usually not ideal to provide adequate handling qualities for general flight and therefore the maximum authority of the inputs provided by this implementation can be limited to the minimum necessary to allow the control out of the hazardous flight phase, reducing the pilot exposure to the non-ideal handling characteristics of the backup control scheme.

In certain embodiments, the process 400 also initiates at least one additional corrective action onboard the aircraft (task 422). The corrective action is initiated in response to determining the potential malfunction, failure state, or error condition. The corrective action(s) are performed in addition to activating the temporary backup control mode. It should be appreciated that any number of corrective actions can be taken alone or in any combination. One type of corrective action involves annunciating an alert onboard the vehicle (aircraft) and/or elsewhere. An alert of this type may be annunciated as any of the following, without limitation: an audio message including human speech; an indicator sound, signal, or audio pattern; display of text indicating the nature of the alert; or haptic feedback. Another type of corrective action involves displaying an indicator onboard the vehicle (aircraft) and/or elsewhere. An indicator of this type may include any of the following, without limitation: a displayed icon, text, color, shape, or graphic; an illuminated light or lamp having a distinguishable color, flashing pattern, intensity, or visible characteristic; or a mechanically actuated hardware component or device, such as a flag, a button, or sign. Another type of corrective action involves adjusting at least one operating mode, feature, or function of the vehicle (aircraft), if appropriate and as needed. As mentioned above, this type of corrective action may involve the adjustment, tuning, modification, or configuration of a flight control system of the aircraft. As another example, this type of corrective action may involve the adjustment, tuning, modification, or configuration of a navigation system of the aircraft. As yet another example, this type of corrective action may cause one or more of the aircraft systems to limit, restrict, or inhibit the use of other sensor data or information that would otherwise be considered by the flight control computer system.

The temporary backup control methodology is intended to be a short-term safeguard measure that provides at least a baseline level of control to safely actuate the desired aircraft control surface(s) until the flight control computer system can automatically react to the potentially problematic conditions and/or until a pilot can engage a redundant or backup inceptor that is functioning as intended. For example, if one of two sidestick controllers in the cockpit of the aircraft is determined to be physically jammed, the process 400 will continue to consider the force sensor data provided by that sidestick controller to actuate the control surface(s) according to a modified control algorithm. The modified control algorithm can be utilized until an operator takes control of the aircraft using the second sidestick controller. Thereafter, actuation of the control surface(s) can be controlled with the second sidestick controller. Accordingly, if the system determines that the temporary backup control mode is to exit (the "Yes" branch of query task 424), then actuation of the moveable control surface is controlled in accordance with the normal or default control mode (task 410). Otherwise, actuation of the moveable control surface continues to be controlled in accordance with the modified control algorithm (following the "No" branch of query task 424).

In certain exemplary embodiments, the process 400 is performed by the flight control computer system, which obtains and processes the force sensor data, the deflection sensor data, and the aircraft data as needed, and issues the appropriate actuation signals to control the movement of the aircraft control surfaces. In alternative implementations, however, some or all of the processing tasks and computer-executed operations can be performed by one or more processors integrated with the inceptor hardware or the inceptor system module. Similarly, some or all of the processing tasks and computer-executed operations can be performed by one or more processors associated with other computer-implemented devices or systems onboard the host vehicle.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

The present disclosure may be further described by the following Aspects.
**Aspect 1**. A method of controlling actuation of a moveable control surface of a vehicle, the method comprising:
   obtaining at least one force measurement and at least one deflection measurement in response to manipulation of an inceptor for the moveable control surface;
   determining a potential malfunction, failure state, or error condition associated with the inceptor, based on the obtained at least one force measurement, the obtained at least one deflection measurement, and vehicle data that characterizes expected operating behavior of the vehicle under current operating conditions;
   in response to the determining step, activating a temporary backup control mode for the moveable control surface;
   while the temporary backup control mode is active, generating control surface actuation signals with an onboard computer system that disregards deflection measurements of the inceptor and processes force measurements of the inceptor; and
   while the temporary backup control mode is active, communicating the generated control surface actuation signals to an actuation system that is coupled to the moveable control surface of the vehicle.
**Aspect 2**. The method of Aspect 1, wherein the generating step generates the control surface actuation signals as limited authority commands.
**Aspect 3**. The method of Aspects 1 or 2, further comprising:
   maintaining the temporary backup control mode as active until corrective action is taken by the onboard computer system.
**Aspect 4**. The method of any one of Aspects 1 to 3, further comprising:
   maintaining the temporary backup control mode as active until corrective action is taken by an operator of the vehicle.
**Aspect 5**. The method of any one of Aspects 1 to 4, further comprising:
   maintaining the temporary backup control mode as active only for a time period defined by a next mitigation action from an operator of the vehicle.
**Aspect 6**. The method of any one of Aspects 1 to 5, wherein:
   the potential malfunction, failure state, or error condition relates to a physical jam or obstruction that inhibits movement of the inceptor; and
   the determining step determines that a deflection measurement is less than expected for a corresponding force measurement.
**Aspect 7**. The method of any one of Aspects 1 to 6, wherein:
   the obtaining step obtains the at least one force measurement from at least one force sensor coupled to the inceptor; and
   the obtaining step obtains the at least one deflection measurement from at least one deflection sensor coupled to the inceptor.
**Aspect 8**. The method of any one of Aspects 1 to 7, further comprising the step of:
   initiating at least one corrective action onboard the vehicle, wherein the initiating is performed in response to determining the potential malfunction, failure state, or error condition, and wherein the initiating is performed in addition to activating the temporary backup control mode.
**Aspect 9**. A system onboard a vehicle having a movable control surface, the system comprising:
   an inceptor configured to control movement of the movable control surface;
   at least one force sensor coupled to the inceptor;
   at least one deflection sensor coupled to the inceptor;
   an onboard computer system comprising at least one processor; and
   at least one processor-readable medium associated with the at least one processor, the at least one processor-readable medium storing processor-executable instructions configurable to be executed by the at least one processor to perform a method of controlling actuation of the movable control surface, the method comprising:
      obtaining force sensor data provided by the at least one force sensor, and deflection sensor data provided by the at least one deflection sensor, in response to manipulation of the inceptor;
      determining a potential malfunction, failure state, or error condition associated with the inceptor, based on the obtained force sensor data, the obtained deflection sensor data, and vehicle data that characterizes expected operating behavior of the vehicle under current operating conditions;
      in response to the determining step, activating a temporary backup control mode for the movable control surface;
      while the temporary backup control mode is active, generating control surface actuation signals with the onboard computer system, wherein usage of the deflection sensor data is limited during generation of the control surface actuation signals; and
      while the temporary backup control mode is active, communicating the generated control surface actuation signals to an actuation system that is coupled to the movable control surface.
**Aspect 10**. The system of Aspect 9, wherein the generating step generates the control surface actuation signals as limited authority commands.
**Aspect 11**. The system of Aspects 9 or 10, wherein:
   the potential malfunction, failure state, or error condition relates to a physical jam or obstruction that inhibits movement of the inceptor; and
   the determining step determines that a deflection measurement is less than expected for a corresponding force measurement.
**Aspect 12**. The system of any one of Aspects 9 to 11, wherein the method performed by the at least one processor further comprises the step of:
   initiating at least one corrective action onboard the vehicle, wherein the initiating is performed in response to determining the potential malfunction, failure state, or error condition, and wherein the initiating is performed in addition to activating the temporary backup control mode.
**Aspect 13.** The system of any one of Aspects 9 to 12, wherein the generating step disregards the deflection sensor data, and generates the control surface actuation signals based on the force sensor data.
**Aspect 14.** An aircraft comprising:
   a moveable control surface;
   an actuation system coupled to the moveable control surface;
   an inceptor configured to control movement of the movable control surface;
   at least one force sensor coupled to the inceptor;
   at least one deflection sensor coupled to the inceptor;
   a flight control computer system comprising at least one processor; and
   at least one processor-readable medium associated with the at least one processor, the at least one processor-readable medium storing processor-executable instructions configurable to be executed by the at least one processor to perform a method of controlling actuation of the movable control surface, the method comprising:
      determining a potential malfunction, failure state, or error condition associated with the inceptor, based on force sensor data provided by the at least one force sensor, deflection sensor data provided by the at least one deflection sensor, and vehicle data that characterizes expected operating behavior of the vehicle under current operating conditions;
      in response to the determining step, activating a temporary backup control mode for the movable control surface;
      while the temporary backup control mode is active, generating control surface actuation signals with the flight control computer system, wherein the generating disregards the deflection sensor data and generates the control surface actuation signals based on the force sensor data; and
      while the temporary backup control mode is active, communicating the generated control surface actuation signals to the actuation system.
**Aspect 15.** The aircraft of Aspect 14, wherein the generating step generates the control surface actuation signals as limited authority commands.
**Aspect 16.** The aircraft of Aspects 14 or 15, wherein:
   the potential malfunction, failure state, or error condition relates to a physical jam or obstruction that inhibits movement of the inceptor; and
   the determining step determines that a deflection measurement is less than expected for a corresponding force measurement.
**Aspect 17.** The aircraft of any one of Aspects 14 to 16, wherein the method performed by the at least one processor further comprises the step of:
   initiating at least one corrective action onboard the aircraft, wherein the initiating is performed in response to determining the potential malfunction, failure state, or error condition, and wherein the initiating is performed in addition to activating the temporary backup control mode.
**Aspect 18.** The aircraft of any one of Aspects 14 to 17, wherein the inceptor comprises a stick controller.
**Aspect 19.** The aircraft of any one of Aspects 14 to 17, wherein the inceptor comprises a yoke.

## Claims

1. A method of controlling actuation of a moveable control surface of a vehicle, the method comprising:
obtaining at least one force measurement and at least one deflection measurement in response to manipulation of an inceptor for the moveable control surface;
determining a potential malfunction, failure state, or error condition associated with the inceptor, based on the obtained at least one force measurement, the obtained at least one deflection measurement, and vehicle data that characterizes expected operating behavior of the vehicle under current operating conditions;
in response to the determining step, activating a temporary backup control mode for the moveable control surface;
while the temporary backup control mode is active, generating control surface actuation signals with an onboard computer system that disregards deflection measurements of the inceptor and processes force measurements of the inceptor; and
while the temporary backup control mode is active, communicating the generated control surface actuation signals to an actuation system that is coupled to the moveable control surface of the vehicle.

2. The method of claim 1, wherein the generating step generates the control surface actuation signals as limited authority commands.

3. The method of claims 1 or 2, further comprising:
maintaining the temporary backup control mode as active until corrective action is taken by the onboard computer system.

4. The method of any one of claims 1 to 3, further comprising:
maintaining the temporary backup control mode as active until corrective action is taken by an operator of the vehicle.

5. The method of any one of claims 1 to 4, further comprising:
maintaining the temporary backup control mode as active only for a time period defined by a next mitigation action from an operator of the vehicle.

6. The method of any one of claims 1 to 5, wherein:
the potential malfunction, failure state, or error condition relates to a physical jam or obstruction that inhibits movement of the inceptor; and
the determining step determines that a deflection measurement is less than expected for a corresponding force measurement.

7. The method of any one of claims 1 to 6, wherein:
the obtaining step obtains the at least one force measurement from at least one force sensor coupled to the inceptor; and
the obtaining step obtains the at least one deflection measurement from at least one deflection sensor coupled to the inceptor.

8. The method of any one of claims 1 to 7, further comprising the step of:
initiating at least one corrective action onboard the vehicle, wherein the initiating is performed in response to determining the potential malfunction, failure state, or error condition, and wherein the initiating is performed in addition to activating the temporary backup control mode.

9. A system onboard a vehicle having a movable control surface, the system comprising:
an inceptor configured to control movement of the movable control surface;
at least one force sensor coupled to the inceptor;
at least one deflection sensor coupled to the inceptor;
an onboard computer system comprising at least one processor; and
at least one processor-readable medium associated with the at least one processor, the at least one processor-readable medium storing processor-executable instructions configurable to be executed by the at least one processor to perform a method of controlling actuation of the movable control surface, the method comprising:
obtaining force sensor data provided by the at least one force sensor, and deflection sensor data provided by the at least one deflection sensor, in response to manipulation of the inceptor;
determining a potential malfunction, failure state, or error condition associated with the inceptor, based on the obtained force sensor data, the obtained deflection sensor data, and vehicle data that characterizes expected operating behavior of the vehicle under current operating conditions;
in response to the determining step, activating a temporary backup control mode for the movable control surface;
while the temporary backup control mode is active, generating control surface actuation signals with the onboard computer system, wherein usage of the deflection sensor data is limited during generation of the control surface actuation signals; and
while the temporary backup control mode is active, communicating the generated control surface actuation signals to an actuation system that is coupled to the movable control surface.

10. The system of claim 9, wherein the generating step generates the control surface actuation signals as limited authority commands.

11. The system of claims 9 or 10, wherein:
the potential malfunction, failure state, or error condition relates to a physical jam or obstruction that inhibits movement of the inceptor; and
the determining step determines that a deflection measurement is less than expected for a corresponding force measurement.

12. The system of any one of claims 9 to 11, wherein the method performed by the at least one processor further comprises the step of:
initiating at least one corrective action onboard the vehicle, wherein the initiating is performed in response to determining the potential malfunction, failure state, or error condition, and wherein the initiating is performed in addition to activating the temporary backup control mode.

13. The system of any one of claims 9 to 12, wherein the generating step disregards the deflection sensor data, and generates the control surface actuation signals based on the force sensor data.

14. An aircraft comprising:
a moveable control surface;
an actuation system coupled to the moveable control surface; and
a system according to any one of claims 9 to 13.

15. The aircraft of claim 14, wherein the inceptor comprises a stick controller, or wherein the inceptor comprises a yoke.
